# EUROPEAN PATENT APPLICATION

(11) **EP 2 508 933 A1**
(43) Date of publication of application: **10.10.2012**
(21) Application number: 11161022.6
(22) Date of filing: 04.04.2011
(51) Int. Cl.: G02B 27/04, G02B 27/22, A47F 11/06, G09F 13/12

(54) **Collapsible 3D display and a method of assembling said 3D display**

(71) Applicant: Realfiction ApS, 1250 Copenhagen (DK)
(72) Inventor: Dyrholm, Clas, 2100, Copenhagen Ø (DK)
(74) Representative: Holme Patent A/S

(57) **Abstract**

The invention relates to a 3D display (1) comprising at least one first image source (26) projecting at least one image onto at least one semi transparent mirror (3) thereby creating a perceived 3D object (8) in a space defined by the at least one semi transparent mirror (3) and a housing (2) by use of Pepper's Ghost technique, wherein the housing (2) and semi transparent mirror (3) are releasable connected to each other and the housing (2) is arranged for being collapsible. Thereby is provided a 3D display that may be produced and stored in a collapsed condition from the factory to the retailer, and at the same time having components of simple character which can be easily and economically mass-produced and readily assembled by anyone without requiring skill or training.

## Description

The invention relates to a 3D display comprising at least one first image source projecting at least one image onto at least one semi transparent mirror thereby creating a perceived 3D object in a space defined by the at least one semi transparent mirror and a housing by use of Pepper's Ghost technique. The invention further relates to a method of assembling the 3D display.

Commercials and shop displays are becoming increasingly more advanced and there is a continuous competition to achieve the attention of customers. Also museums are experiencing rising demands to offer alternative exhibitions and new ways for the visitors to obtain advanced information intuitively and visually.

In this respect 3D illusions have become increasingly more interesting for shop owners and museums. One of the best-known techniques for creating 3D illusions is the Pepper's ghost technique. The Pepper's Ghost technique has been described many times. Recently and easy to understand by Julien Clinton Sprott in *Physics Demonstrations* page 255.

Said technique is simple to use, and when used by a person with insight into geometry and optics, the technique can create impressive three-dimensional illusions of objects seeming to appear in free air like a ghost. Recently this technique has been used to create perceived 3D objects in small-scale displays as described in EP 1846798 allowing the viewer to observe a perceived 3D object from several angles.

However, it is frequently necessary or desirable to supplement existing 3D displays with displays which in themselvs are advertising the relevant goods, and even though conventional 3D advertising the goods, and even though conventional 3D displays are capable of displaying alternating products, the 3D display itself is not adapted for being readily altered in concomitantly with changes in e.g. merchandise and product lines as said displays are extremely expensive and complicated to manufacture.

In order to overcome this problem, some industries provide a second display holder along a shelf edge or on a table adjacent to the displayed goods in the 3D display. Since the information in these display holders is not attached to the relevant goods, potential consumers must associate the information in the display holder with the goods in the 3D display to ensure it is accurate.

Furthermore, as the quility of the persieved object in the 3D disply are significant for the users experience of the product, the conventional 3D displays used in retail and other sales establishments are pre-constructed, in order to ensure that the mutual components of the display are correctly and accurately-mounted. This also makes these pre-constructed display systems impossible to change and make it less desirable to customize the displays of items, products, or goods. Where such pre-constructed 3D display systems are customized to a particular product, it will be wasteful because they may have a time limited use or may become worn over time and, thus, unappealing.

Thus, there is a demand for 3D displays, which can provide a high quality, perceived, three-dimensional object, and which simultaneously easily can be customized and altered in relation to a new product and simultaneously be removed and stored when the need for their use has ended.

Under such conditions, it is most desirable to have displays that can be quickly assembled and positioned at appropriate, high-traffic locations e.g. within a store and thereafter be easily collapsed, and stored efficiently. However, it has presently not been possible to manufacture such displays.

Thus, there is a need for a simple but yet effect-full 3D display with convincing 3D realization/illusion, which can be assembled without prior training even by persons without any technical skills. Such a 3D display can enable the viewer to obtain information about e.g. a new sports car on virtual display in a 3D display in a car dealer or about the advanced structure of proteins in a museum or in a laboratory.

Furthermore, there is a need to provide a 3D display, which in a simple and reliable manner can be adapted or altered according to the object of interest.

It is therefore a first aspect of the present invention to provide a 3D display that may be produced and stored in a collapsed condition from the factory to the retailer.

It is a second aspect of the present invention to provide a 3D display having components of simple character which can be easily and economically mass-produced and readily assembled by anyone without requiring skill or training or expensive equipment.

It is a third aspect of the present invention to provide a collapsible and interactive 3D display, which is easy and simple to operate.

It is a forth aspect of the present invention to provide a 3D display using low cost, reusable, and customizable display systems for retail or other sales outlets to display items, products and goods.

These and further aspects are achieved according to the present invention as the 3D display comprising at least one first image source projecting at least one image onto at least one semi transparent mirror thereby creating a perceived 3D object in a space defined by the at least one semi transparent mirror and a housing by use of Pepper's Ghost technique, wherein the semi transparent mirror and housing are releasable connected to each other and the housing is arranged for being collapsible.

In this way the 3D display according to the invention provides a freestanding collapsible display that can be disassembled to a folded and flat condition and stored in a relatively small area. Accordingly said 3D display can also be assembled to provide a rigid freestanding structure. Furthermore the semi transparent mirror and other essential parts can optionally be protected while in a collapsed state.

Thereby is provided a 3D display that may be produced and stored in a collapsed condition from the factory to the retailer, and at the same time having components of simple character which can be easily and economically mass-produced and readily assembled by anyone without requiring skill or training.

The collapsible 3D display offers a unique range of possibilities for presenting the perceived 3D objects creating an enhanced optical illusion. One reason to this enhancement of the 3D illusion is that the housing helps define the room and the depth in the perceived 3D object. By clearly defining a space with depth in which the perceived 3D object can exist it is possible using the 3D display according to the invention to create objects of a definition and a scale never before possible resulting in a much more realistic look than anything previously achieved using a more conventional Pepper's Ghost set up.

Such an enhanced 3D illusion broadens the possibilities of use, both as the 3D display can be used under a wider spectrum of conditions and due to the fact that it is possible to display more challenging perceived 3D object, which in a 3D display of the types known in the art will be in risk of not convincingly seem to be three dimensional but instead appearing flat.

The collapsible 3D display according to the present invention can be used in many contexts, from an easy to access shop display to advanced learning tools and games.

By the term "collapsible" within the meaning of the present invention is meant that the housing is arranged for being folded compactly, e.g. for transport and storage purposes. Thus said term comprises both the situation where the housing can be folded but also the situation where the housing can be dismantled to provide the desired compatibility of the housing. Accordingly, it said term also means that one or more parts of the housing can be folded one or more parts of the housing can be dismantled.

In a preferred embodiment the housing comprises a stage and a top section interconnected by three side sections. Said side sections can preferrably be made of an inexpensive material e.g. cardboard or a similar material, such as paper board, plastics or plywood. Such an embodiment further has the advantages that it will be possible to print ads or information relation to the goods displayed in the 3D display according to the invention directly on the cardboard.

This is for example especially relevant for a product line that is only manufactured and sold for a period of one year, and then replaced with a new product line, whereby the side sections become useless after that year, and thus easily can be replaced.

Furthermore, ads and displays printed for a specific event, such as a sale event or other promotional event, become outdated and can therefore easily be discarded and replaced after the event ends.

As an example can be mentioned that if the object to be displayed in the 3D display is merchandise from a movie, the sides of the 3D display could also show related parts of the movie, additional information about said merchandise and/or similar information.

When the side sections of the 3D display according to the invention is made of an inexpensive material, only the side sections need to be replaced, thus when a product line is cancelled or altered, the retailer can simply order or make new side sections having the new ads and/or information printed on the side sections.

Accordingly, the top section can also be partly or completely made of a similar inexpensive material and be arranged for being able to print on said top section. In this way the 3D display according to the invention is adapted for being readily altered, in concomitantly with changes in e.g. merchandise and product lines. As an alternative can the side and top sections be covered with a releasable coating or similar covering which comprises the relevant information.

In a preferred embodiment according to the invention the three side sections are integrated into a single frame section, in such that the three side sections are interconnected by transverse folding lines. Thereby is advantageously obtained that the three side sections automatically cohere and form an integral unity. The 3D display according to the invention is therefore stronger and easier to assemble.

The frame is preferably cut from a single sheet of cardboard, paper board, plastics or plywood as this will provide a flat frame according to the invention which is not only inexpensive to fabricate, but also light and therefore easy to carry.

In the unfolded state the frame has a relatively small thickness. Similar the image source, stage and top sections can also have a relatively small thickness, ensuring that the 3D display in the collapsed stage will occupy a relatively small amount of storage space

It is preferred that the individual parts of the 3D display according to the invention can be assemblies in a very simply manner e.g. by using a click system, a snap-fit system or similar fastening means which provides a releasable engagement of the individual sections. In reality any kind of assembling method can be used as long as the obtained 3D display is sufficient rigid, solid and durable. It is however preferred that the display according to the invention is assembled without utilizing joining means such as glue and tape, in order to ensure that the display easily can be dismantled after used or when one or more sections of the housing are to be replaced with a new section.

In one embodiment according to the invention the housing also comprises a reinforcement means. Said reinforcement means is preferably an additional sheet-part provided at the "forth and free" side of the frame, in order to ensure that the frame is securely kept in place. The reinforcement means will also provide a resting place for the top section of the housing.

The reinforcement means is preferably made from the same material as the frame and can be fasted to the frame by means of e.g. clips or rivets. However, other fastening means are also contemplated within the scope of protection. In any case the reinforcement means can optionally simply be discharged together with e.g. the frame. In a similar way the reinforcement means can also be provided with information and/or ads relation to the product displayed in the 3D display according to the invention.

It is understood that the 3D display according to the invention can be made of any kind of material as long as the display can be both easily assembled and dismantled, and in one embodiment according to the invention the housing can be constructed at least partly of other materials, e.g. by using conventional toy construction systems. As an example can be mentioned that the housing can be partly assembled utilising construction toy bricks e.g the well-known Lego®-bricks. In this respect the bricks can be provided in a kit comprising among others sufficient bricks for at least partly assembling the housing of the 3D display and a semi transparent mirror.

As the 3D display according to the invention uses the Pepper's Ghost technique, which is based on optical illusions, it is critical to maintain the 3D feeling of the perceived 3D object and to avoid that it suddenly becomes flat to the observer or otherwise looses its creditability.

In this respect it is relevant to use an image source of a good quality. In one embodiment the image source can be a 50-200Hz LCD screen, as this can provide a screen of good quality as well as they are reasonable in price. An advantageous other option is to use a OLED screen due to the improved contrast, but in principle any screen or image source is applicable. The screen can also be a 3D auto-stereoscopic screen, as this provides a way of displaying steroscopic images provides without the use of special headgear or glasses on the part of the viewer. Optionally can the image source be a hand held laptop or other similar means readily available to the user.

In a preferred embodiment the top section of the housing is arranged for accommodating the image source. In this respect the top section preferably comprises an opening which comprises at least one support section, preferably in the form of a circumferical indentation, for allowing the image source to rest securely on the at least one support section and simultaneously allowing the image source to transmit the perceived object through the opening.

In order to ensure that the image source is protected from impacts from users and viewers, the top section can optionally comprise a cover fitting the free opening after the image source has been placed in the top section and which ensures that the image source is protected e.g. from impact from viewers.

In order for the perceived object to appear as clear and sharp as possible the semi transparent mirror comprises a reflecting side, which preferably faces the image source. It also enhances the illusion that the reflection is higher than the transmission through the semi transparent mirror, as the reflected image in this case is clear and the perceived 3D object thus appears more vivid that if the reflection is sparse. Exemplary data for a semi transparent mirror, chosen to ensure a luminous perceived 3D object are known in the art.

It must be noted, that the 3D display according to the invention comprises a single semi transparent mirror in order to ensure that the display can be assembled as simple and easily as possible.

The semi transparent mirror is preferably mounted in an inclined way in the housing as this will ensure that a viewer will perceiving the object as having depth rather than merely being a two dimensional image. This is well known within the art of Pepper's Ghost technique.

The term "semi transparent mirror" within the present document are meant to encompass any kind of reflective and semi transparent screen capable of creating a Pepper's Ghost illusion. Thus the term also comprises reflective and semi transparent membranes and foils made of e.g. a polymeric composite.

It is preferred that the reflection layer of the "semi transparent mirror" is the outer layer facing the image source, as it is then possible using the 3D display according to the invention to create objects of a definition and a scale never before possible resulting in a much more realistic look than anything previously achieved using a conventional Pepper's Ghost set up.

Alternatively the semi transparent mirror can comprise a thin protective layer covering the reflection layer, as this will provide a larger resistance to the mirror. Said protective layer is preferably less than 400 nm, more preferably less than 200 µm, and even more preferably less than 50 µm.

The housing can preferably also be arranged for placing a physical object, e.g. a prop, on the stage, e.g. by providing a housing comprises a re-closable opening in the housing, preferably the frame. By placing a physical object on the stage the 3D display has the advantage that said physical object can be coupled with the perceived 3D object. As an example can be mentioned that a physical shoe can be supplied with a number of different perceived surfaces, enabling the viewer to see the shoe not only in different colors but also with different textures.

In a similar manner a physical toy can be placed on the stage, and the 3D display according to the invention can provide different perceived objects on said toy, providing new possibilities and experiences for the viewer/user.

The perceive object using Peppers Ghost technique relies on the reflected image formed by light contrasting with its immediate surroundings and background. The stronger the reflected image, the more solid that reflected image looks, the more vibrant the colors will be, and the more visible the reflected image is to an audience.

In circumstances where the presenter may be unable to control high levels of ambient light forward of the foil, e.g. from an auditorium at a trade show, the high level of ambient light results in significant levels of reflection of the ambient light from the semi transparent mirror detracting from the strength of the reflected image over the background. In such circumstances it is preferably that the 3D display according to the invention may comprise a light source arranged to selectively illuminate an area of the stage. This is especially advantageously if a physical object e.g. a prop is placed on the stage.

The light source may be a white light source. Lighting the physical object causes the physical object to become more visible and better defined against the dark, typically black, background. This enhances the three dimensional effect of the perceived object interacting with the physical object.

The 3D display may comprise a light source arranged to illuminate at least part of a stage. The light source may be located to the rear of the semi transparent mirror, typically along a top edge of the housing and/or along either side of the frame, however in a preferred embodiment the additional light source is incorporated into the top section of the housing.

The 3D display may further comprise a plurality of light sources, and may also comprise a lighting desk equipped with faders arranged to control the level of each light source, or selection means arranged to selectively control the supply of power to each light source. Such a light source is used to ensure that the color and light levels of the area immediately surrounding the perceived object, can match the color of the projection surface background. Furthermore, the use of a plurality of light sources increases the uniformity of lighting of the stage. By controlling each light source separately the lighting levels upon the stage can be controlled to minimize the levels of unwanted light hitting the semi transparent mirror.

The 3D display according to the invention can be assembled in any convenient manner, however in a preferred embodiment the display is assembled by first connecting the three side sections or the frame with the stage. In this respect the stage can have one or more grooves and/or recesses along it edge, which corresponds to opposing projections on the three side sections, such that the three side sections and stage fit and click into place in a similar way as a key in a key hole.

In order to ensure that the three side sections or the frame is rigidly and solidly placed in connection to the stage, the the three side sections can optionally be reinforced by attaching the reinforcement member to the top section of the side sections, such that the reinforcement member extend in the open area between the two free upper corners of the side sections of the frame.

Thereafter the semi transparent mirror is placed inclined in the free area between the stage and the three side sections or the frame. In this respect the stage and the three side sections are preferably arranged to retain the semi transparent mirror under tension, such that the semi transparent mirror is inclined at an angle with respect to a plane of emission of light from the image source.

The semi transparent mirror if further securely keep in place when the top section of the housing is placed on the three side sections and optionally on the reinforcement member. The image source is then placed in the on the top section, and a cover for protection the image source can in some embodiments be placed on top of the image source for protecting the image source from physical damage.

Depending on the intended use, the 3D display according to the invention can comprise relevant software to provide not only the desired perceived objects but also additional relevant information. This can be of relevance if the perceived object is a toy and the software comprises one or more small games or information sections, which enable the user/viewer to interact with the perceived toy or to gain additional information about details of a displayed perceived "virtual" shoe on display in a shoe shop.

The invention also relates to a 3D display system comprising at least one 3D display according to the invention and at least one additional presentation means for presenting audio and/or visual information. In this way the perceived object may be accompanied by additional information such as text, image sequences and/or music. The additional presentation means can be a conventional computer and/or a loud speaker.

The invention will be explained in greater detail below, describing only an exemplary embodiment of the 3D display according to the invention with reference to the drawing, in which
Fig. 1 shows a front perspective view of a preferred embodiment of an assembled 3D display according to the present invention,
Fig. 2 shows the 3D display according to the invention in a collapsed stage and provided as a kit in a box.
Fig. 3 shows a method of assembling the 3D display according to the invention in a first assembling stage,
Fig. 4 shows a method of assembling the 3D display according to the invention in a second assembling stage,
Fig. 5 shows a method of assembling the 3D display according to the invention in a third assembling stage,
Fig. 6 shows a method of assembling the 3D display according to the invention in a forth assembling stage,
Fig. 7 shows a method of assembling the 3D display according to the invention in a fifth assembling stage,
Fig. 8 shows a method of assembling the 3D display according to the invention in a sixth assembling stage,

The invention is described below with the assumption that the 3D display is used for presenting a toy. This assumption is not to be construed as limiting as any kind of object can be shown using the 3D display according to the present invention.

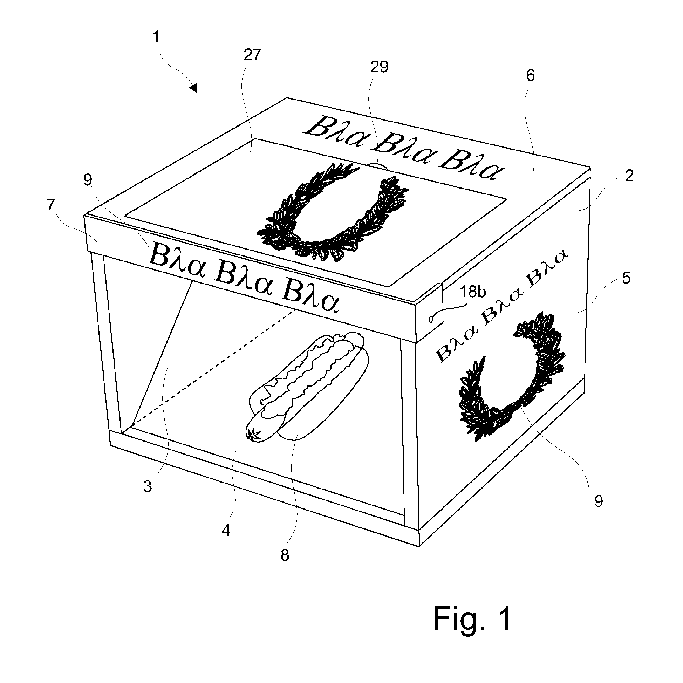

In fig. 1 the 3D display 1 consist basically of a housing 2 and a semi transparent mirror 3. The housing comprises a stage 4, a frame 5, a top section 6 and a reinforcement member 7. As is evident from fig. 1 a perceived 3D object 8 (a toy in the form of a hotdog), is created in the space defined by the semi transparent mirror 3 and the housing 2 by use of Pepper's Ghost technique.

In the embodiment shown, ads and information 9 are placed on the outer surface of the frame 5, the top section 6, and the reinforcement member 7, and as said sections are made of an inexpensive material, it is ensured that if a product line is cancelled or altered, the retailer can simply order or prepare one or more replacements parts of the frame 5, the top section 6, and the reinforcement member 7 having the new ads and/or information printed on their surfaces, and the retailer need therefore not also replace the more expensive semi transparent mirror and image source, as would have been the situation with the conventional 3D displays. In this way the 3D display according to the invention is adapted for being readily altered in concomitantly with changes in e.g. merchandise and product lines.

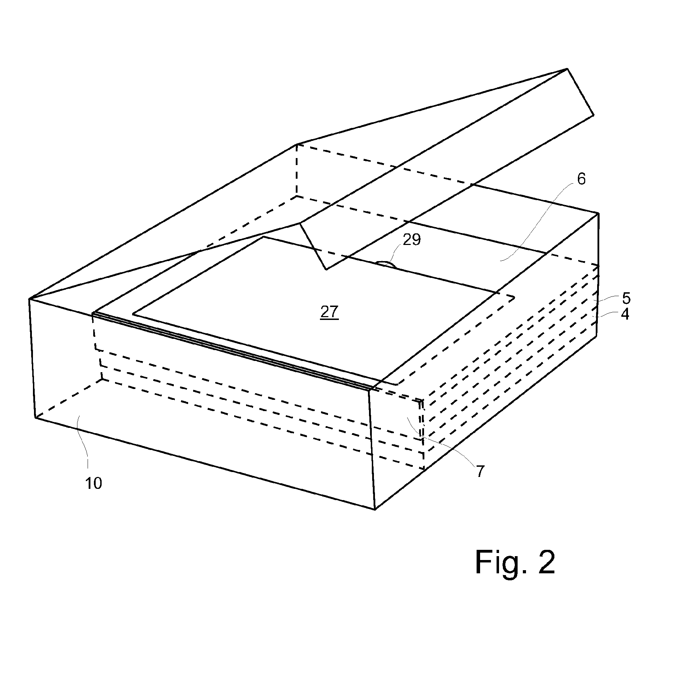

Figure 2 shows the 3D display 1 according to the invention in the collapsed stage and provided as a kit 10 in a box. Thereby is provided a 3D display 1 that may be produced and stored in a collapsed condition from the factory to the retailer, and at the same time having components of simple character which can be easily and economically mass-produced and readily assembled by anyone without requiring skill or training.

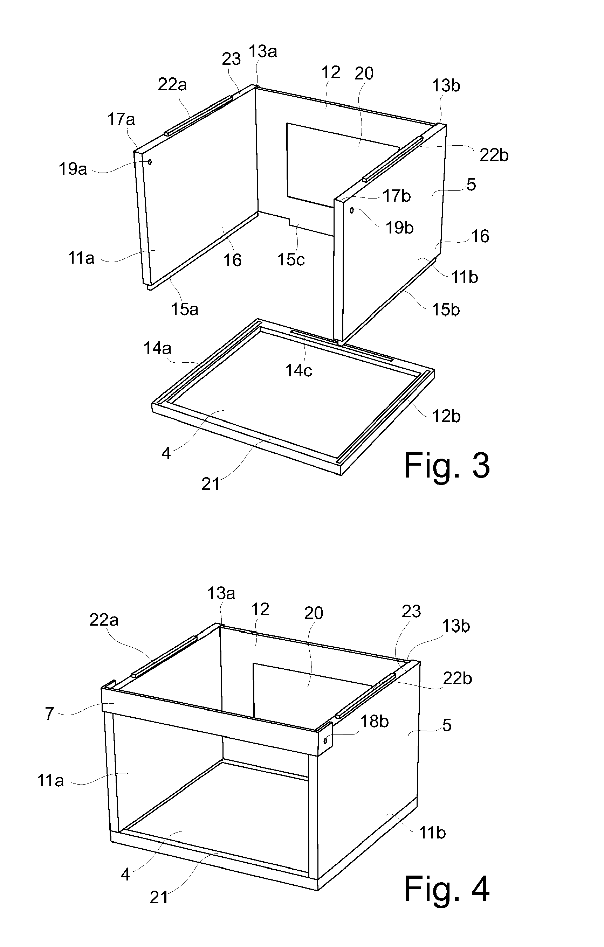

Figure 3 - 8 shows one way of assembling the 3D display 1 according to the invention. As is evident from fig. 3, the display is assembled by first connecting the frame 5 to the stage 4. In the embodiment shown the frame 5 is made up of two side sections 11a, 11b interconnected with a third side section 12 by transverse folding lines 13a, 13b.

The third side section is in the following referred to as the back section, as it constitutes the backside of the 3D display. Thereby is advantageously obtained that the side sections and back section automatically cohere and form an integral unity, i.e. the frame 5. The 3D display 1 according to the invention is therefore stronger and easier to assemble.

In this respect the stage 4 has a three grooves 14a,14b,14c close to its periphery in order to accommodate three projection 15a,15b,15c on the lower edge 16 of the frame 5. The inventors have found that when said projections 15a,15b,15c of the frame 5 has a very tight fit with grooves 14a,14b,14c, a rigid and solid structure is provided, which can be assembled without use of additional attachment means such as glue and/or tape.

However, in order to ensure that the two free upper corners 17a,17b of the side sections 11a,11b of the frame 5 have sufficient support and that the frame 5 is rigidly and solidly placed in connection to the stage 4, the frame 5 can be reinforced, as best seen in fig. 4, by attaching a reinforcement member 7 to said two upper corners 17a,17b, such that the reinforcement member 7 extend in the upper open area between the two side sections 11a,11b.

The reinforcement member 7 is secured to the two corners 17a,17b by means of two rivets 18a, 18b, using preformed openings 19a, 19b in said two corners 17a,17b.

In order to be able to place a physical object, e.g. a prop, on the stage 4, the back section 12 comprises a re-closable opening 20. By placing a physical object on the stage 4, the 3D display according to the invention can show different perceived objects on or in combination with said toy, providing a variety of possibilities for the user/viewer.

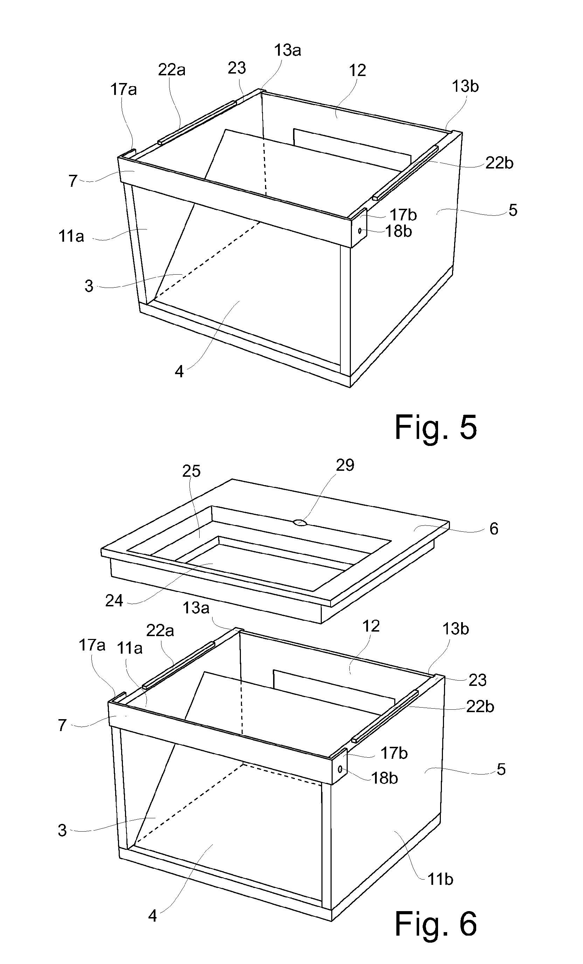

As is best seen in fig. 5 the semi transparent mirror 3 is thereafter placed inclined in the free area between the stage 4 and the frame 5. In this respect the stage 4 comprises a groove 21 for retaining the mirror 3 under tension, such that the semi transparent mirror 3 is inclined at an angle of preferably 45°.

In a similar manner as the frame 5 and stage 4 engages via a number of projections, the top section 6 comprises two grooves (not shown), which is arranged for engaging with projection 22a, 22b, placed on the upper edge 23 of the frame 5. As with the assembly of the stage 4 and the lower projections 15a,15b,15c, the fit between the top section 6 and the upper projections 22a, 22b is sufficiently tight to ensure that the 3D display according to the invention is rigid and solid, without the need for additional attachment means.

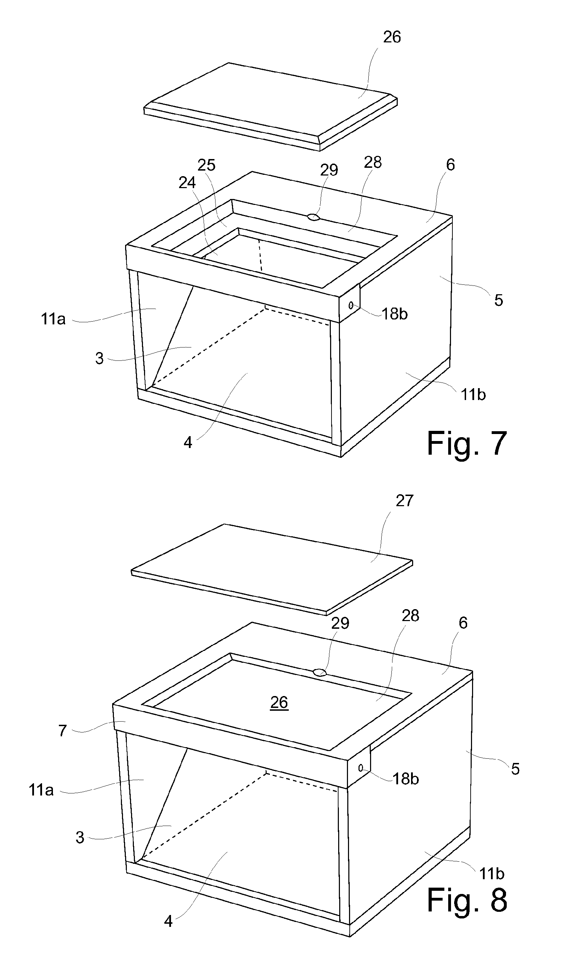

Placement of the top section 6 also ensures that the semi transparent mirror 3 is securely keep in place, as the top section prevents any movement of the mirror 3 during use. As can be seen in fib. 6 and fig. 7 the top section 6 comprises an opening 24 and a circumferical support section 25, arranged for allowing the image source 26 to rest securely on the support section 25 and simultaneously allowing the image source 26 to transmit the perceived object through the opening 24.

In the embodiment shown the support section 25 is a simple indentation in the top section, and other kind of support sections are contemplated within the scope of the present invention, the only requirement is that the support section is to be able to keep the image source 26 securely in place during operation. In the embodiment shown in the figures the image source is a LCD screen. Said LCD screen and any light source optionally placed in the top section, can be powered using e.g. a conventional wire, which can be connected to a plug, via a small hole in the housing.

As can be seen in fig. 8, after the image source 26 is placed on the support section 25, the image source is protected from impacts from users and viewers by placement of a cover 27 fitting the free opening 28 in the top section 6. A small recess 29 is placed on the top section such that the user easily can remove said cover 27 and accordingly said image source 26, when the 3D display according to the invention is to be dismantled.

After placement of the cover 27, the 3D display depicted in fig. 1 is assembled, and power can be provided to the image source 26 such that the perceived 3D object 8 can be shown in the display.

Thus, the present invention provides a simple but yet effect-full 3D display, which can be assembled and dismantled without prior training even by persons without any technical skills. In this respect the invention provides a low cost and customizable 3D display ensuring that if a product line is only manufactured and sold for a short period of time, the part of the housing comprising specific ads and information, can easily can be replaced with different parts relating to ads and/or information for the the new product line.

Modifications and combinations of the above principles and designs are foreseen within the scope of the present invention.

## Claims

1. A 3D display (1) comprising at least one first image source (26) projecting at least one image onto at least one semi transparent mirror (3) thereby creating a perceived 3D object (8) in a space defined by the at least one semi transparent mirror (3) and a housing (2) by use of Pepper's Ghost technique, wherein the housing (2) and semi transparent mirror (3) are releasable connected to each other and the housing (2) is arranged for being collapsible.

2. The 3D display (1) according to claim 1, wherein the housing (2) comprises a stage (4) and a top section (6), interconnected by three side sections (11a,11b,12).

3. The 3D display (1) according to claim 2, wherein at least one of the top section (6) and three side sections (11a,11b,12) are made of card board, paper board, plastics or plywood or a similar material.

4. The 3D display (1) according to claim 2 - 3, wherein the three side sections (11a,11b,12) are interconnected by folding lines (13a,13b) such that the three side sections (11a,11b,12) are intergrated into a frame (5).

5. The 3D display (1) according to any of the preceding claims, wherein the housing (2) is arranged for being assembled by means of a click system, a snap-fit system or by using fastening means which provides a releasable engagement of the individual sections of the housing (2).

6. The 3D display (1) according to any of the preceding claims, wherein the housing (2) further comprises reinforcement means (7).

7. The 3D display (1) according to any of the preceding claims, wherein the housing (2) is arranged for accommodating the image source (26).

8. The 3D display (1) according to any of the preceding claims, wherein the top section (6) comprises a support section (25) having an opening (24) with at least one support portion (25).

9. The 3D display (1) according to any of the claims 2 - 8, wherein the housing (1) is arranged for allowing a physical object to be placed on the stage (4).

10. The 3D display (1) according to any of the claims 2 ― 9 wherein the 3D display (1) further comprises at least one light source, preferably placed in the top section (6) of the housing (2).

11. A method of assembling a 3D display according to any of the claims 2 - 10, wherein said method comprises
- connecting the stage (4) with the three side sections (11a,11b,12),
- placing the semi transparent mirror (3) inclined in relation to the stage and the three side sections (11a,11b,12),
- connecting the top section (6) to the three side sections (11a,11b,12), and
- placing the image source (26) in the top section (6).

12. The method according to claim 11, wherein the method further comprises reinforcing the three side sections (11a,11b,12), by attaching a reinforcement member (7) to the free side sections (11a,11b).

13. The method according to claim 11 or 12, wherein the method further comprises placing a cover (27) on top of the image source (26).

14. A kit for a 3D display (1) according to any of the claims 1 - 10, wherein said kit (10) comprises at least one semi transparent mirror (3) and a collapsible housing (2), and wherein the kit optionally comprises an image source (26).

15. Use of the interactive 3D display (1) according to any of the claims 1 - 10 for providing a perceived 3D object (8) optionally in combination with a physical object.
